# EUROPÄISCHE PATENTSCHRIFT

(11) **EP 3 387 386 B1**
(45) Veröffentlichungstag und Bekanntmachung des Hinweises auf die Patenterteilung: **31.01.2024**
(21) Anmeldenummer: 16808656.9
(22) Anmeldetag: 08.12.2016
(51) Int. Cl.: G01C 25/00, G01S 5/00, G01S 5/02

(54) **VERFAHREN UND VORRICHTUNG ZUR HOCHPRÄZISEN POSITIONSBESTIMMUNG EINES MOBILEN GERÄTES SOWIE VERFAHREN ZUR LOKALISIERUNG ODER POSITIONIERUNG VON ORTSFESTEN GERÄTEN**
METHOD AND DEVICE FOR HIGH-PRECISION POSITION DETERMINING OF A MOBILE DEVICE AND METHOD FOR LOCATING OR POSITIONING STATIONARY DEVICES
PROCÉDÉ ET DISPOSITIF DE DÉTERMINATION DE LA POSITION D'UN APPAREIL MOBILE AVEC UNE PRÉCISION ÉLEVÉE ET PROCÉDÉ DE LOCALISATION OU DE POSITIONNEMENT D'APPAREILS FIXES

(30) Priorität: 08.12.2015 DE 102015121384
(43) Veröffentlichungstag der Anmeldung: 17.10.2018
(73) Patentinhaber: Schneider Electric Industries SAS, 92500 Rueil-Malmaison (FR)
(72) Erfinder: ZINN, Marcus, 63110 Rodgau (DE)
(74) Vertreter: Stoffregen, Hans-Herbert
(86) Internationale Anmeldenummer: PCT/EP2016/080262
(87) Internationale Veröffentlichungsnummer: WO 2017/097905

(56) Entgegenhaltungen:
- EP-A2- 2 735 844
- DE-B3-102012 224 422
- DE-B3-102012 224 422

## Beschreibung

Die Erfindung bezieht sich auf ein Verfahren zur hochpräzisen Positionsbestimmung eines mobilen Gerätes mittels Nahfeldkommunikation (NFC - Near Field Communication), wobei eine NFC-Kommunikation zwischen einer ersten NFC-Antenne einer Kalibrierungsvorrichtung und einer zweiten NFC-Antenne des mobilen Gerätes hergestellt wird, wenn diese in Nähe zueinander sind, um Positionsdaten in das mobile Gerät zu übertragen, wobei das mobile Gerät bezogen auf die Position der ersten NFC-Antenne in einer reproduzierbar definierten Position positioniert wird, wobei durch die NFC-Kommunikation zwischen der zumindest einen ersten NFC-Antenne und der zweiten NFC-Antenne die aktuelle Position der zweiten NFC-Antenne ermittelt und in einem Speicher des mobilen Gerätes gespeichert wird und wobei eine inertiale Navigationseinheit in Bezug auf die aktuelle Position kalibriert wird sowie auf eine Kalibrierungsvorrichtung zur hochpräzisen Lagebestimmung eines mobilen Gerätes mittels Nahfeldkommunikation (NFC - Near Field Communication), wobei die Kalibrierungsvorrichtung zumindest eine erste NFC-Antenne und einen Speicher aufweist, wobei der Speicher konfiguriert ist, Positionsdaten zu speichern, die einer Position der NFC-Antenne entsprechen, wobei das mobile Gerät eine zweite NFC- Antenne und eine damit gekoppelte Steuereinheit aufweist, wobei die NFC-Kommunikation zwischen der ersten NFC-Antenne und der zweiten NFC-Antenne initiiert wird, wenn sich die zweite NFC-Antenne in der Nähe der ersten NFC-Antenne befindet und wobei die Positionsdaten von der ersten NFC-Antenne zu der zweiten NFC-Antenne übertragen werden, wobei der Kalibrierungsvorrichtung ein Lagefxiermittel zugeordnet ist, welches ausgebildet ist, einen Gehäuseabschnitt des mobilen Gerätes während der NFC-Kommunikation in einer bezogen auf die Position der zumindest einen ersten NFC-Antenne reproduzierbar definierten Position zu positionieren und dass die zumindest eine erste NFC-Antenne mit einer Steuereinheit gekoppelt ist, die ausgebildet ist, um die NFC-Kommunikation zwischen der zumindest einen ersten NFC-Antenne und der NFC-Antenne zur Ermittlung von aktuellen Positionsdaten der zweiten NFC-Antenne zu steuern und wobei eine Steuereinheit des mobilen Gerätes ausgebildet ist, um eine inertiale Navigationseinheit in Bezug auf die ermittelten aktuellen Positionsdaten zu kalibrieren.

Ein Verfahren und eine Vorrichtung der eingangs genannten Art sind in der DE 10 2012 224 422 B3 beschrieben. Bei einem Verfahren zur Indoor-Lokalisation von Objekten wird ein mobiles Gerät verwendet, welches seine aktuelle Position, Geschwindigkeit und/der Ausrichtung mittels Trägheitsnavigation ermittelt. Das mobile Gerät passiert wenigstens eine Referenzstation, wobei auf die Position, Geschwindigkeit und/oder Ausrichtung des mobilen Geräts bezogene Referenzinformationen drahtlos von dieser Referenzstation an das mobile Gerät übertragen werden und wobei das mobile Gerät die Referenzinformationen zum Korrigieren der mittels Trägheitsnavigation ermittelten Positionen, Geschwindigkeit und/oder Ausrichtung verwendet.

Die US 2015/0119086 A1 betrifft eine Vorrichtung mit zumindest einem mobilen Gerät, welches sich innerhalb einer Umgebung bewegen kann. Das mobile Gerät umfasst eine inertiale Messeinheit und zumindest einen Funkfrequenzempfänger. Das mobile Gerät erfasst inertiale Messungen durch die inertiale Messeinheit und Werte von Signalstärken durch den zumindest einen Funkfrequenzempfänger. Ferner umfasst die Vorrichtung ein Positionierungsmodul, welches eine simultane Positionierung und Abbildung des zumindest einen mobilen Gerätes innerhalb der Umgebung, basierend auf den inertialen Messungen ermöglicht.

Zum regelmäßigen Reset der Position des mobilen Gerätes sind Orientierungspunkte, wie GPS-Angaben, NFC (Near Field Communication) -Tags oder zweidimensionale Bar-Codes vorgesehen, die ihre absoluten Positionsdaten enthalten und mit Sensoren, wie Kamera, GPS, NFC-Chip oder Bluetooth, ausgelesen werden können. Mit Ausnahme der optischen Erkennung von Bar-Codes ist bei dem bekannten Verfahren vorgesehen, dass das mobile Gerät zum Reset nicht aus der Tasche eines Benutzers herausgenommen wird.

Die aktuelle Position des mobilen Geräts wird über Funkfrequenzempfänger ermittelt, wobei die Genauigkeit der Positionsbestimmung in Abstufungen erfolgt, die im DezimeterBereich liegen. Die Funkfrequenzempfänger müssen während der Positionsbestimmung online betrieben werden, so dass der Energieverbrauch hoch ist.

Die US 2013/0332273 A1 betrifft ein System zur Bestimmung der Positionen eines mobilen Gerätes, umfassend ein Funknetzwerk mit Funknetz-Knoten zur Kommunikation mit dem mobilen Gerät zur Messung von Signalstärken des mobilen Gerätes. Das Funknetzwerk umfasst auch Nahfeldkommunikations-Knoten zur Kommunikation mit dem mobilen Gerät, wobei die Nahfeldkommunikations-Knoten zumindest auf Anforderung die mobilen Geräte mit Konfigurationsinformationen versorgen, um dem mobilen Gerät zu ermöglichen, sich mit den Funknetzwerk-Knoten zu verbinden. Das System umfasst zudem einen Positionierungs-Server zum Empfang von Signalstärke-Informationen von dem Funknetzwerk, zur Bestimmung der Position des mobilen Gerätes und zur Versorgung des mobilen Gerätes mit einer grafischen Darstellung seiner Position innerhalb eines Gebäudeplans.

Bei dem bekannten Systemen wird die aktuelle Position des mobilen Gerätes über ein Funknetzwerk bestimmt, so dass die Positionierungsgenauigkeit eingeschränkt und der Energieverbrauch hoch ist. Ferner ist die Positionierungsbestimmung störanfällig, da stets eine Verbindung zwischen Funkfrequenzempfänger und Sender bestehen muss.

Die EP 2 442 600 B1 bezieht sich auf ein Nahfeldkommunikationssystem (NFC - Near Field Communication) mit einem NFC-Tag, dessen geografische Position durch NFC-Kommunikation in ein mobiles drahtloses Gerät übertragen wird. Die geografische Position wird innerhalb des mobilen drahtlosen Gerätes verwendet, um eine Authentifizierung durchzuführen. Die Authentifizierung ist eine Voraussetzung, um eine weitere Kommunikation mit dem NFC-Tag durchführen zu können.

Die US 2012/0293330 A1 bezieht sich auf ein System und ein Verfahren zum Schutz eines zum Verkauf ausgelegten Handelsartikels. Der Handelsartikel umfasst ein Gehäuse, zumindest einen in dem Gehäuse angeordneten Sensor und zumindest eine in dem Gehäuse angeordnete Ausgabevorrichtung. Das Sicherheitssystem umfasst ferner eine in dem Gehäuse angeordnete Steuerung, die mit dem Sensor und der Ausgabevorrichtung gekoppelt ist. Die Steuerung ist ausgebildet, um eine von dem Handelsartikel in Bezug zu einer "Home"-Position einer Verkaufsauslage zurückgelegte Distanz basierend auf einem Sensorsignal des Sensors zu bestimmen. Ferner erfolgt eine Aktivierung der Ausgabevorrichtung basierend auf der Distanz, die von dem Handelsartikel zurückgelegt wird, wenn diese eine Schwellwertdistanz überschreitet. Die Steuerung kann den mindestens einen Sensor in Verbindung mit einem Trägheitsnavigationssystem und Bewegungsverarbeitungsalgorithmen verwenden, um die von dem Handelsartikel zurückgelegte Distanz von der "Home"-Position der Verkaufsauslage zu bestimmen.

Der Artikel von Busra Ozdenizci u.a. "NFC Internal: An Indoor Navigation System", Sensors, 2015, 15. Jg. Nr. 4 S. 7571-7595, bezieht sich auf ein auf Near-Field-Kommunikation (NFC)-basierendes Indoor-Navigationssystem. Benutzer werden durch ein Gebäude oder einen Gebäudekomplex navigiert, indem der Benutzer NFC-Tags berührt, die in dem Gebäude verteilt sind. Dadurch wird ein Update der lokalen Position des Benutzers ermöglicht, um diesen zu dem Ziel zu führen.

Die Diplomarbeit von Benjamin Steeb "Ortung und ortsbezogene Anwendung im Museums-Kontext", 2013, http://elib.uni-stuttgart.de/handle/11682/3252, offenbart einen Museumsführer für Android, der Informationen zu Exponaten anzeigt. Mit Hilfe mehrerer W-Lan Acces Points im Museum ermittelt der Museumsführer die Exponate in der Nähe des Besuchers und vereinfacht damit deren Suche. Zusätzlich ist an jedem Museumsstück eine Station auf Gadgeteer-Basis angebracht, mit der die Besucher interagieren können, um Informationen zum Ausstellungsstück zu erhalten. Es werden drei unterschiedliche Stationen entwickelt: zwei werden mit der Hand in Kombination mit einem RFID-Armband bedient und eine kommuniziert direkt mit dem Museumsführer über NFC. Die Museumsinhalte liegen auf einem Server und können von den Kuratoren über einen Web-Frontend verwaltet werden.

Davon ausgehend liegt der vorliegenden Erfindung die Aufgabe zugrunde, ein Verfahren und eine Vorrichtung zur hochpräzisen Lagebestimmung eines mobilen Gerätes derart weiterzubilden, dass die Genauigkeit der Lagebestimmung verbessert und der Energieverbrauch sowie die Störanfälligkeit reduziert wird.

Die Aufgabe wird erfindungsgemäß durch ein Verfahren mit den Merkmalen des Anspruchs 1 sowie durch eine Vorrichtung mit den Merkmalen des Anspruchs 6 gelöst.

Das erfindungsgemäße Verfahren zeichnet sich gegenüber dem Stand dadurch aus, dass die zumindest eine erste NFC-Antenne NFC-Signale unterschiedlicher Signalstärke aussendet, wobei mit jedem NFC-Signal zumindest ein Positionsdatenwert übertragen wird, der einer Reichweite des jeweiligen NFC-Signals entspricht und wobei die von der zweiten NFC-Antenne empfangenen NFC-Signale in einer Steuereinheit des mobilen Gerätes ausgewertet werden, wobei die Positionsdatenwerte des NFC-Signals mit der geringsten empfangenen Signalstärke als Positionsdatenwerte der zweiten NFC-Antenne gespeichert werden.

Durch zuvor wiedergegebene Verfahrensmerkmale kann eine sehr genaue, störungsfreie und energiesparsame Positionsbestimmung erfolgen.

Vorzugseise weisen von der zumindest einen ersten NFC-Antenne ausgesendeten NFC-Signale eine Reichweite im Bereich von 0 mm ≤ RW ≤ 150 mm auf, wobei die Signalstärke aufeinanderfolgender NFC-Signale derart gesteuert wird, dass eine Reichweitenänderung (ΔRW) aufeinanderfolgender Signale im Bereich von 0,50 mm ≤ Δ RW ≤ 10 mm, vorzugsweise ΔRW = 2 mm, liegt.

Die durch das NFC-Signal gesendeten Positionsdaten umfassen vorzugsweise geografische Positionswerte der ersten NFC-Antenne sowie zumindest einen Offset-Positionswert ΔX, ΔY, ΔZ, der der jeweiligen Reichweitenänderung der ausgesendeten NFC-Signale entspricht. Hierbei ist vorgesehen, dass vorzugsweise Offset-Positionsdaten der Koordinatenrichtung geändert werden, in die die NCF-Signale ausgesendet werden.

Vorzugsweise sendet die zumindest eine erste NFC-Antenne zuerst ein NFC-Signal mit einer fixen Position der ersten NFC-Antenne und anschließend nur NFC-Signale mit zumindest einem Offset-Positionsdatenwert aus, der der Reichweitenänderung der jeweiligen NFC-Signale in Ausbreitungsrichtung entspricht.

Zur weiteren Verbesserung der Genauigkeit der Positionsbestimmung, dass die ersten NFC-Antennen in Form eines NFC-Antennen-Arrays angeordnet werden, wobei das mobile Gerät in definierter Position durch die zweite NFC-Antenne ein Signal in Richtung auf die NFC-Antennen des Antennen-Arrays sendet, die auf Empfang geschaltet sind, und wobei diejenige NFC-Antenne, die ein Signal mit der größten Signalstärke empfängt, anschließend NFC-Signale mit unterschiedlicher Reichweite aussendet, wobei mit jedem NFC-Signal zumindest ein Positionsdatenwert übertragen wird, der der Reichweite des jeweiligen NFC-Signals entspricht und wobei die Positionsdaten des NFC-Signals mit der geringsten empfangenen Signalstärke als RX-, RY-, RZ-Positionsdaten der zweiten NFC-Antenne gespeichert werden.

Des Weiteren bezieht sich die Erfindung auf eine Kalibrierungsvorrichtung zur hochpräzisen Lagebestimmung eines mobilen Gerätes mittels Nahfeldkommunikation (NFC - Near Field Communication), wobei die Kalibrierungsvorrichtung zumindest eine erste NFC-Antenne und einen Speicher aufweist, wobei der Speicher konfiguriert ist, Positionsdaten zu speichern, die einer Position der NFC-Antenne entsprechen, wobei das mobile Gerät eine zweite NFC-Antenne und eine damit gekoppelte Steuereinheit aufweist, wobei die NFC-Kommunikation zwischen der ersten NFC-Antenne und der zweiten NFC-Antenne initiiert wird, wenn sich die zweite NFC-Antenne in der Nähe der ersten NFC-Antenne befindet und wobei die Positionsdaten von der ersten NFC-Antenne zu der zweiten NFC-Antenne übertragen werden, wobei der Kalibrierungsvorrichtung ein Lagefxiermittel zugeordnet ist, welches ausgebildet ist, einen Gehäuseabschnitt des mobilen Gerätes während der NFC-Kommunikation in einer bezogen auf die Position der zumindest einen ersten NFC-Antenne reproduzierbar definierten Position zu positionieren, wobei die zumindest eine erste NFC-Antenne mit einer Steuereinheit gekoppelt ist, die ausgebildet ist, um die NFC-Kommunikation zwischen der zumindest einen ersten NFC-Antenne und der NFC-Antenne zur Ermittlung von aktuellen Positionsdaten der zweiten NFC-Antenne zu steuern und dass eine Steuereinheit des mobilen Gerätes ausgebildet ist, um eine inertiale Navigationseinheit in Bezug auf die ermittelten aktuellen Positionsdaten zu kalibrieren, wobei die mit der ersten NFC-Antenne gekoppelte Steuereinheit derart ausgebildet ist, NFC-Signale unterschiedlicher Signalstärke zu senden, wobei mit jedem NFC-Signal zumindest ein Positionsdatenwert übertragen wird, der der Reichweite des NFC-Signals entspricht und wobei die Steuereinheit des mobilen Gerätes ausgebildet ist, die empfangenen NFC-Signale derart auszuwerten, dass die Positionsdaten des NFC-Signals mit der geringsten empfangenen Signalstärke als Positionsdaten der zweiten NFC-Antenne gespeichert werden.

Gemäß einer weiteren bevorzugten Ausführungsform spannt das Fixiermittel ein Referenz-Koordinatensystem auf, wobei in einer RX-RY-Ebene eine einzige NFC-Antenne angeordnet ist und/oder wobei in der RX-RY-Ebene ein Array aus NFC-Antennen angeordnet ist und/oder wobei in der RX-RY-Ebene, einer RX-RZ-Ebene oder einer RY-RZ-Ebene jeweils eine oder mehrere NFC-Antennen angeordnet sind, die die NFC-Signale aus verschiedenen Richtungen auf die zweite NFC-Antenne senden.

Des Weiteren ist vorgesehen, dass das Fixiermittel mechanische Anschläge in RX-, RY-, und/oder RZ-Richtung oder eine Aufnahme für zumindest einen Gehäuseabschnitt des mobilen Gerätes aufweist und/oder dass das Fixiermittel ein auf einer RX-RY-Ebene angeordneter Winkel und/oder eine rutschfeste Matte mit Markierung ist.

Das mobile Gerät ist vorzugsweise ein Smartphone, Tablet oder Stift, wobei vorzugsweise die zweite NFC-Antenne in einer Spitze des Stiftes integriert und mit einer ebenfalls in dem Stift integrierten Steuereinheit gekoppelt ist, wobei die Steuereinheit ausgebildet ist, die von der zweiten NFC-Antenne empfangenen Positionsdaten als eigene Positionsdaten abzuspeichern und um eine inertiale Navigationseinheit in Bezug auf die empfangenen Positionsdaten zu kalibrieren.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung der den Zeichnungen zu entnehmenden bevorzugten Ausführungsbeispiel.

Es zeigen:
- Fig. 1a), b): eine schematische Darstellung einer Kalibriervorrichtung zur hochpräzisen Lagebestimmung eines mobilen Gerätes in Vorder- und Seitenansicht,
- Fig. 2: eine schematische Darstellung einer alternativen Ausführungsform eines mobilen Gerätes,
- Fig. 3: eine schematische Darstellung einer NFC-Kommunikation,
- Fig. 4: eine schematische Darstellung einer ersten Ausführungsform der Kalibriervorrichtung,
- Fig. 5: eine schematische Darstellung einer zweiten Ausführungsform der Kalibriervorrichtung,
- Fig. 6: eine schematische Darstellung einer dritten Ausführungsform der Kalibriervorrichtung,
- Fig. 7: eine schematische Darstellung eines Innenraums eines Gebäudes mit Kalibriervorrichtungen in Räumen, Schaltschränken und/oder Geräten,
- Fig. 8: eine schematische Darstellung eines Schaltschrankes mit Kalibriervorrichtung und
- Fig. 9: eine schematische Darstellung eines Automatisierungsgerätes mit Kalibriervorrichtung.

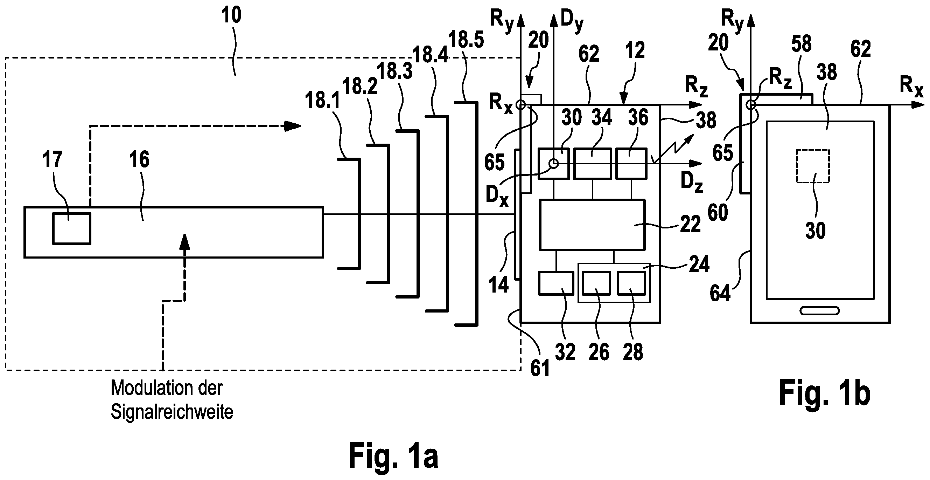

Fig. 1a) und 1b) zeigen rein schematisch eine Kalibriervorrichtung 10 zur hochpräzisen Lagebestimmung eines mobilen Gerätes 12 mittels Nahfeldkommunikation (NFC - Near Field Communication) in Vorder- und Seitenansicht.

Die Kalibrierungsvorrichtung 10 umfasst zumindest eine NFC-Antenne 14, die mit einer Steuereinheit 16, wie Transceiver, gekoppelt ist, der ein Speicher 17 zugeordnet ist. Die Steuereinheit 16 ist konfiguriert, um eine Transaktion basierend auf NFC-Signalen (18.1...18.k) zu initiieren. Der Speicher 17 ist konfiguriert, um Positionsdaten in Form von Geopositionsdaten oder benutzerdefinierten Koordinaten zu speichern, die einer Position der NFC-Antenne 14 oder einer Referenzposition eines Lagefixiermittels 20 entsprechen, welches der Kalibrierungsvorrichtung 10 zugeordnet ist.

Das mobile Gerät 12 umfasst zumindest einen Prozessor 22, eine inertiale Navigationseinheit 24, mit zumindest einem Beschleunigungssensor 26 sowie zumindest einem Magnetfeldsensor 28, zumindest eine NFC-Antenne 30 sowie einen Speicher 32. Die Navigationseinheit 24, die NFC-Antenne 30 sowie der Speicher 32 sind mit einem Prozessor 22 verbunden.

Zudem kann das mobile Gerät 12, wie z.B. ein Smartphone, ein Navigationsmodul 34 sowie einen Hochfrequenz-Transceiver 36 zur Kommunikation nach dem WiFi-, 4G-LTE-, oder Bluetooth-Standard aufweisen.

Des Weiteren umfasst das mobile Gerät 12 eine Anzeigeeinheit 38, auf der z.B. ein Grundriss eines Innenraums eines Gebäudes, eine aktuelle Position des mobilen Gerätes 12 sowie ein Navigationspfad zu einem Zielpunkt angezeigt werden können.

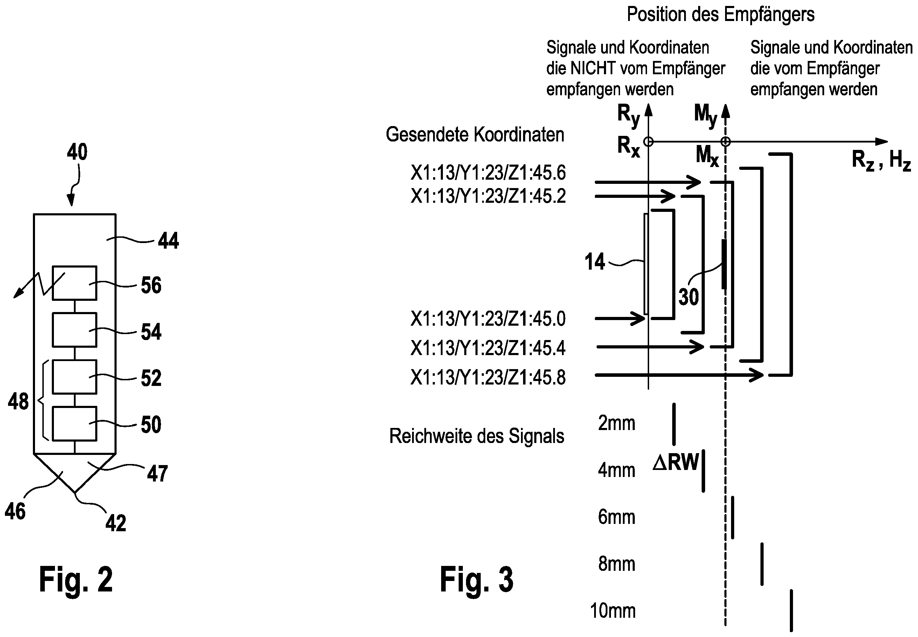

Fig. 2 zeigt eine alternative Ausführungsform eines mobilen Gerätes 40 in Form eines Stiftes, mit einer Gehäusespitze 42 und einem sich daran anschließenden Gehäuse 44. In der Spitze 42 des Gehäuses 44 ist eine NFC-Antenne 46 mit Steuereinheit 47, wie Transceiver, angeordnet, um eine NFC-Kommunikation mit der NFC-Antenne 14 der Kalibrierungsvorrichtung 10 zu initiieren, wenn der Stift 40 in die Nähe der NFC-Antenne 14, insbesondere in den Koordinatenursprung des Lagefixiermittels 20, geführt wird.

Ferner umfasst das mobile Gerät 40 eine inertiale Navigationseinheit 48 mit zumindest einem Beschleunigungssensor 50 sowie zumindest einem Magnetsensor 52. Der Transceiver 47 sowie die inertiale Navigationseinheit 48 sind mit einem Prozessor 54 verbunden. Des Weiteren ist eine Sende-/Empfangseinheit 54 vorgesehen, die über einen Funkstandard, wie WiFi oder Bluetooth, mit einem externen Gerät, wie Smartphone, Laptop oder Tablet oder einem Funknetzwerk, kommuniziert, um die aktuelle Position bzw. Orientierung des mobilen Gerätes 40 in einer Umgebung, wie Innenraum eines Gebäudes, auf einer Anzeigeeinheit darzustellen.

Der Erfindung liegt die Idee zugrunde, auf der Basis einer Nahfeld-Kommunikation die Millimeter-genaue Position des mobilen Gerätes 12, 40 zu bestimmen und anschließend die ermittelte Position in das mobile Gerät 12, 40 zu übertragen, wobei der Prozessor 22, 54 des mobilen Gerätes 12, 40 ausgebildet ist, die inertiale Navigationseinheit 24, 48 in Bezug auf die aktuelle Position des mobilen Gerätes 12, 40 zu kalibrieren.

Basierend auf der hochpräzisen Millimeter-genauen Lagebestimmung des mobilen Gerätes 12, 40 kann dieses zur Inhouse-Navigation, zur Lokalisierung und/oder Positionierung von ortsfesten Objekten genutzt werden.

Bei einer ersten bevorzugten Ausführungsform der Erfindung wird das mobile Gerät 12, 40 in dem Lagefixierungsmittel 20 der Kalibrierungsvorrichtung 10 positioniert. Das Lagefixierungsmittel 20 kann beispielsweise als Winkelelement ausgebildet sein, wobei sich ein erster Schenkel 58 entlang einer RX-Achse und ein Schenkel 60 entlang einer RY-Achse eines kartesischen Referenz-Koordinatensystems RX-RY-RZ erstreckt. Im dargestellten Ausführungsbeispiel bildet die RY-RZ-Ebene die Zeichenebene, wobei die RX-Achse senkrecht in die Zeichenebene zeigt. Das mobile Gerät 12 wird in dem Lagefixierungsmittel 20 derart fixiert, dass eine Rückwand 61 an der RX-RY-Ebene anliegt, während ein oberer Rand 62 entlang der RX-Achse an dem Schenkel 58 und ein seitlicher Rand 64 entlang der RY-Achse an dem Schenkel 60 verläuft. Folglich liegt eine Ecke 65 des mobilen Gerätes 12 im Koordinatenursprung RX0, RY0, RZ0.

Sobald das mobile Gerät 12 in dem Lagefixierungsmittel 20 positioniert ist, wird die NFC-Kommunikation zwischen der NFC-Antenne 14 und der NFC-Antenne 30 aktiviert, wobei Positionsdaten von der NFC-Antenne 14 zu der NFC-Antenne 30 übertragen werden.

Um die Millimeter-genaue Position der NFC-Antenne 30 innerhalb des mobilen Gerätes 12 zu bestimmen ist vorgesehen, dass die NFC-Antenne 14 nacheinander Signale 18.1...18.k mit unterschiedlichen Signalstärken und damit unterschiedlichen Reichweiten aussendet. Die Einstellung der Signalstärke erfolgt durch die Steuereinheit 16. Mit jedem Signal 18.1...18.k werden unterschiedliche Positionskoordinaten gesendet, wobei zumindest eine RZ-Koordinate proportional der Reichweite des Signals ist bzw. der Reichweite des Signals entspricht.

Fig. 3 zeigt die Signale 18.1...18.k und deren jeweilige Reichweite in Bezug zu der RZ-Achse des Referenz-Koordinatensystem RX-RY-RZ. Dabei wird vorausgesetzt, dass die NFC- Antenne 14 flächig in der RX-RY-Ebene liegt, wie in Fig. 1 dargestellt.

Pro Achse, die einen eigenen Chipsatz hat, kann ein Achsenwert gesetzt werden. Existiert nur ein Chipsatz z.B. auf der Z-Achse, werden die X-Y-Werte nicht mit einem Offset gesendet, sondern nur mit einem konstanten Wert.

Mit jedem Signal werden konstante RX1-RZ1-Koordinaten als RX-RY-Koordinaten der NFC-Antenne 14 sowie variable RZ1-Koordinaten gesendet, die der Reichweite des jeweiligen Signals bezogen auf das RX-RY-RZ-Koordinatensystem entsprechen. Im dargestellten Ausführungsbeispiel wird die Signalstärke derart gesteuert, dass Signale mit einem Signalreichweiten-Unterschied ΔRW von 2mm gesendet werden. Nach Fixierung des mobilen Gerätes 12 in dem Lagefixierungsmittel 20 kann die NFC-Antenne 30 nur diejenigen Signale - im dargestellten Beispiel die Signale 18.3... 18.5 - empfangen, deren Reichweite mindestens dem Abstand zwischen der NFC- Antenne 14 und der NFC-Antenne 30 entspricht.

Folglich werden die Signale 18.1 und 18.2, die auf Grund ihrer geringen Reichweite die NFC-Antenne 30 nicht erreichen, bei der Bestimmung der Position der NFC-Antenne 30 nicht benutzt. Die von der NFC-Antenne 30 empfangenen Signale 18.3, 18.4, 18.5 werden in dem Prozessor 22 analysiert, wobei von den empfangenen Signalen das Signal mit der kleinsten Signalstärke ausgewählt wird. Die RZ-Koordinate dieses Signals entspricht der DZ-Koordinate der NFC-Antenne 30.

Folglich entsprechen die empfangenen Koordinaten einer RX- und RY-Position der NFC-Antenne sowie der gesendeten RZ-Koordinate der NFC-Antenne 14 mit einem Offset-Wert, der dem Abstand zwischen der NFC-Antenne 14 als Sender und der NFC-Antenne 30 als Empfänger entspricht. Dadurch ist die aktuelle Position der NFC-Antenne 30 und folglich auch des mobilen Gerätes 12 bestimmt. Die so ermittelten Koordinaten werden in dem mobilen Gerät 12 gespeichert.

Anschließend erfolgt eine Kalibrierung des zumindest einen Beschleunigungssensors 26 sowie des zumindest eines Magnetfeldsensors 28 in Bezug auf die empfangene aktuelle Position des mobilen Gerätes 12.

Auch besteht die Möglichkeit, dass in dem Speicher 17 der Steuereinheit 16 die Koordinaten RXO, RYO, RZO des Koordinatenursprungs des Referenz-Koordinatensystems als Referenzpostion gespeichert sind. Diese Koordinaten können über die NFC-Antenne 14 an das in dem Lagefixierungsmittel 20 positionierte mobile Gerät 12 übertragen werden. Auf Grund der definierten Position in dem Referenz-Koordinatensystem können die Ursprungskoordinaten als Referenzposition zur Kalibrierung der inertialen Navigationseinheit 24 verwendet werden, wobei eine Kalibrierung auf eine im Koordinatenursprung RXO, RYO, RZO des Referenzkoordinatensystems liegende Gehäusespitze 65 des mobilen Gerätes 12 erfolgt.

Auch auf diese Weise dürfte der Grundgedanke der vorliegenden Erfindung realisiert werden, nämlich dem mobilen Gerät 12 seine aktuellen Positionskoordinaten zu übermitteln, die seiner exakten Position entsprechen.

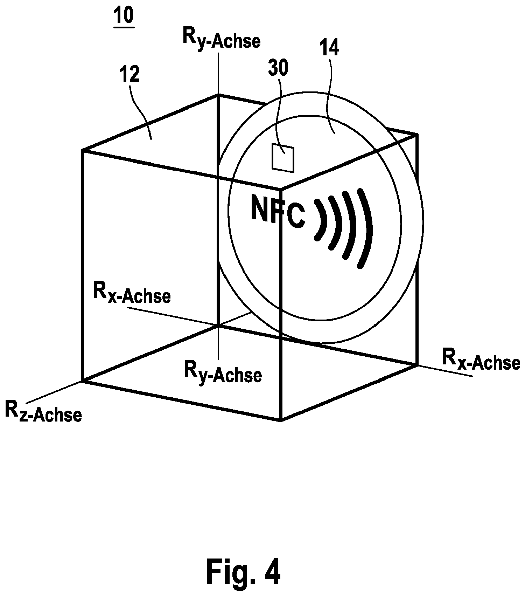

Fig. 4 zeigt eine Ausführungsform der Kalibrierungsvorrichtung 10, wobei die NFC-Antenne 14 als Flächen-Antenne ausgebildet ist, mit einer Flächenerstreckung, die wesentlich größer ist als eine Flächenausdehnung der NFC-Antenne 30, 46 des mobilen Gerätes 12, 40. Dadurch wird sichergestellt, dass die von der NFC-Antenne 14 ausgehenden Signale 18.1...18.k im Nahbereich weitgehend die Form einer parallel zur RX-RY-Ebene verlaufenden Welle aufweisen mit der Folge, dass Ungenauigkeiten durch die sphärische Ausbreitung der Signale 18.1...18.k vernachlässigt werden können.

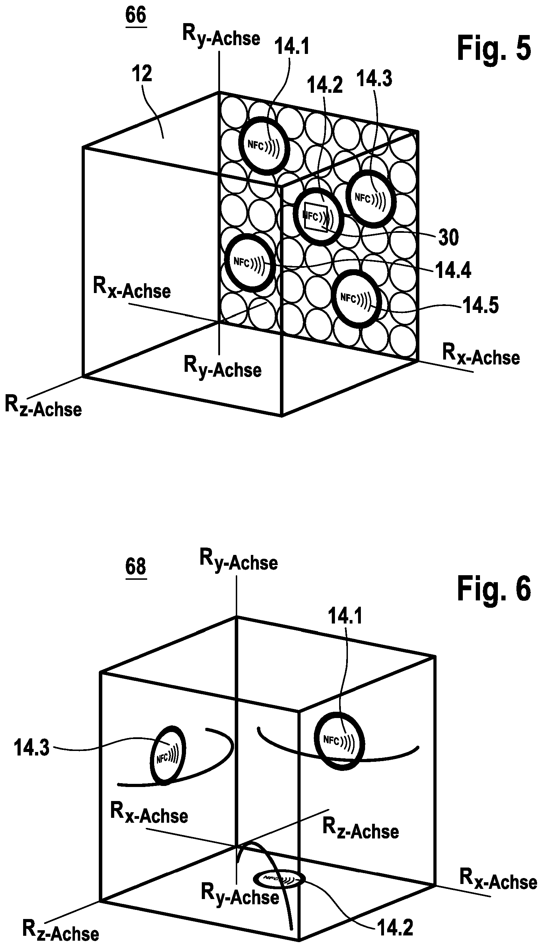

Fig. 5 zeigt eine zweite Ausführungsform einer Kalibrierungsvorrichtung 66. Bei dieser Ausführungsform ist vorgesehen, dass in der RX-RY-Ebene ein matrixförmiges Array aus NFC-Antennen 14.1...14.n angeordnet ist, wobei jeder einzelnen NFC-Antenne 14.1 ... 14.n eine entsprechende RX-RY-Koordinate des Referenz-Koordinatensystems zugeordnet ist. Die NFC-Kommunikation zwischen den NFC-Antennen 14.1...14.n und der NFC-Antenne 30 des mobilen Gerätes erfolgt nach dem gleichen Prinzip wie in Fig. 1 und Fig. 3 beschrieben. Mit der Anordnung der NFC-Antennen 14.1...14.n in Form eines Arrays kann jedoch eine höhere Genauigkeit bei der Bestimmung der RZ- sowie RX- und RY-Koordinaten der NFC-Antenne 30 erreicht werden.

Bei der Ausführungsform der Kalibrierungsvorrichtung 66 gemäß Fig. 5 besteht auch die Möglichkeit, nach Fixierung des mobilen Gerätes 12, 40 in dem Lagefixierungsmittel 20 die NFC-Antenne 30 zunächst als NFC-Sender und die NFC-Antennen 14.1...14.n als NFC-Empfänger zu schalten. Sodann wird diejenige NFC-Antenne 14.1...14.n, im vorliegenden Fall die NFC-Antenne 14.2, selektiert, die das stärkste Signal empfängt und somit den geringsten Abstand zu der NFC-Antenne 30 aufweist. Anschließend kann die NFC-Antenne 14.2 als Sender geschaltet werden, gemäß der NFC-Kommunikation entsprechend Fig. 3, um den Abstand, d.h. die RZ-Koordinate der NFC-Antenne 30 zu ermitteln.

Durch dieses Verfahren kann dem mobilen Gerät 12 die Millimeter-genaue Position der NFC-Antenne 30 innerhalb des mobilen Gerätes 12 übertragen werden.

Fig. 6 zeigt eine dritte Ausführungsform einer Kalibrierungseinrichtung 68, wobei in einer RX-RY-Ebene, RX-RZ-Ebene sowie RY-RZ-Ebene je ein oder mehrere NFC-Antennen 14.1...14.N angeordnet sind. Bei dieser Ausführungsform können Signale aus verschiedenen Richtungen zu der NFC-Antenne 30 gesendet werden, um eine exakte Positionsbestimmung, z.B. nach dem Triangulationsverfahren, vornehmen zu können.

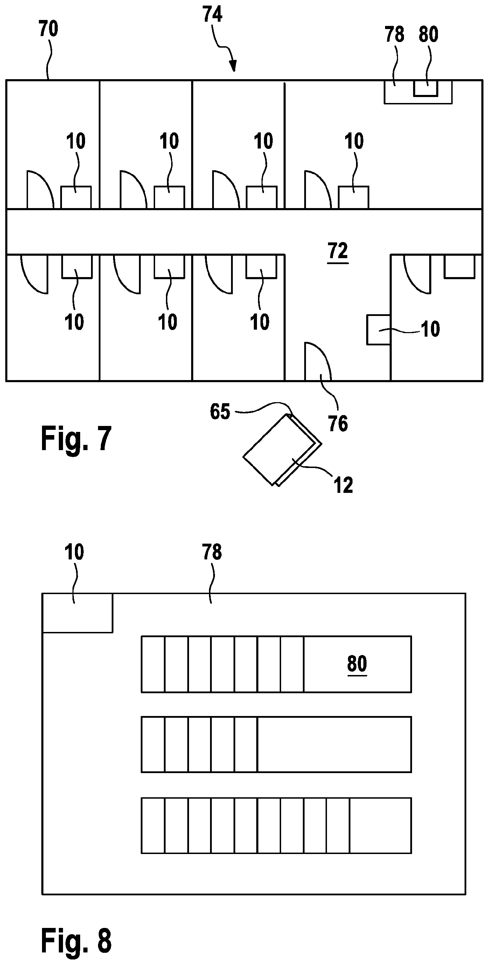

Fig. 7 zeigt einen Grundriss 70 eines Innenraums 72 eines Gebäudes 74, wobei in dem Innenraum Kalibrierungsvorrichtungen 10 zur hochpräzisen Millimeter-genauen Positionsbestimmung des mobilen Gerätes 12 verteilt angeordnet sind.

Beim Betreten des Innenraums 72 startet ein Benutzer zunächst eine mobile Applikation zur Innenraum-Navigation auf dem mobilen Gerät 12. Zur Kalibrierung der mobilen Applikation positioniert ein Benutzer das mobile Gerät 12 in dem Lagefixierungsmittel 20 der Kalibrierungsvorrichtung 10, z.B. in der Nähe des Eingangs 76, so dass die NFC-Kommunikation zur Ermittlung und Übertragung der aktuellen Position (Referenzposition) in das mobile Gerät 12 gestartet wird. Anschließend ist die Applikation positionsmäßig kalibriert, "kennt" also die Startposition des mobilen Gerätes 12.

Nachdem dem mobilen Gerät 12 durch die Kalibrierungsvorrichtung 10 seine exakte Position übermittelt wurde, kann das mobile Gerät 12 ohne externe Einrichtungen im Innenraum 70 im Inneren des Gebäudes 72 navigieren. Die Navigation erfolgt dabei ausschließlich auf der Grundlage der inertialen Navigationseinheit 24 in Kombination mit dem Positionierungsmodul 32, durch welches der Grundriss 74 des Innenraums 70 auf dem Display 38 des mobilen Gerätes 12 zusammen mit der tatsächlichen Position des mobilen Gerätes 12 angezeigt werden.

Anschließend können Zielobjekte 78, 80, wie Räume, Schaltschränke, Komponenten in Schaltschränken, Geräte oder andere Objekte im Innenraum 70, lokalisiert werden, deren Koordinaten in der mobilen Navigationsapplikation lokal oder in einer externen Datenbank außerhalb des mobilen Gerätes verfügbar sind.

Die exakte Position der Objekte 78, 80 kann über die Nahfeldkommunikation zwischen der Kalibrierungsvorrichtung 10 und dem mobilen Gerät 12 in den Speicher 32 übertragen werden. Auch besteht die Möglichkeit, dass die Koordinaten der Objekte 78, 80 bereits in dem Speicher 32 abgespeichert sind oder über die Sende-Empfangs-Einrichtung 36 aus einem Funknetz in das mobile Gerät 12 geladen werden.

Vorzugsweise sind in der Kalibrierungsvorrichtung 10 die 3D-Koordinaten der NFC-Antenne 14 oder der Referenzpositionen gespeichert, wobei die Koordinaten GPSkompatible Geokoordinaten oder benutzerspezifische Koordinaten entsprechend des Referenz-Koordinatensystems RX, RY, RZ sein können. Im vorliegenden Ausführungsbeispiel wird das benutzerspezifische Referenz-Koordinatensystem RX=0, RY=0 sowie RZ=0 verwendet.

Fig. 8 zeigt als Zielobjekt 78, z.B. einen Schaltschrank, mit Kalibrierungsvorrichtung 10 und einer Vielzahl von Komponenten 80, wie Schalter, 1/0-Einheiten, Steuerungen usw. Zur Lokalisierung der bestimmten Komponente 80 kann das mobile Gerät 12 zur Erhöhung der Genauigkeit an der mit dem Schaltschrank 78 verbundenen Kalibrierungsvorrichtung 10 kalibriert oder auch re-kalibriert werden. Anschließend kann die Komponente 80, dessen exakte Koordinaten in dem Speicher 32 hinterlegt sind, durch Millimeter-genau mit Hilfe der inertialen Navigationseinheit 24 lokalisiert werden.

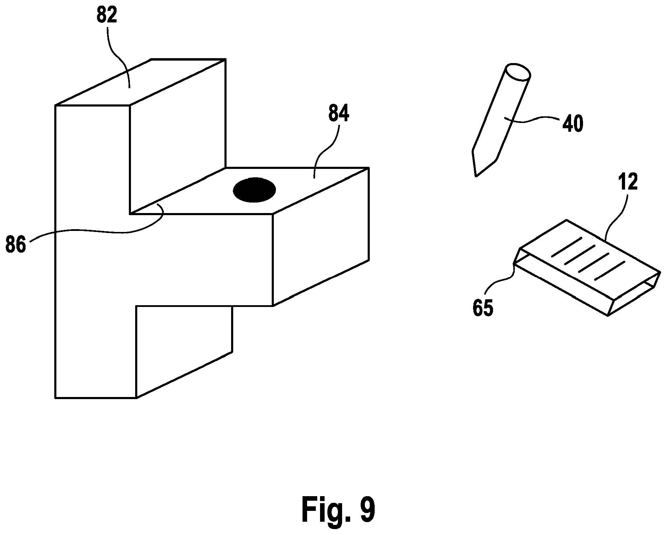

Fig. 9 zeigt die Möglichkeit der Positionierung eines Gerätes 82 an einer vorgegebenen Position, z.B. im Innenraum 70 des Gebäudes 72 oder im Schaltschrank 78. Hierzu ist vorgesehen, dass das Gerät 82 eine NFC-Antenne 84 mit Steuereinheit sowie eine Lagefixierungseinrichtung 86 aufweist. Das mobile Gerät 12, welches die exakte Soll-Position des Gerätes 82 kennt, wird in der Lagefixierungseinrichtung 86 fixiert und so lange mit dem Gerät 86 bewegt, bis eine auf dem Display des mobilen Gerätes 12 angezeigte Ist-Position der Soll-Position entspricht.

Auf Grund der NFC-Antenne 84 kann anschließend die aktuelle Position aus dem mobilen Gerät 12 in einen Speicher des Geräts 82 übertragen werden. Die Positionsdaten können in einer Datenbank gespeichert werden, so dass die Möglichkeit besteht, das Gerät 82 anschließend zu lokalisieren.

Da das Gerät 82 seine aktuelle Position kennt, kann das Gerät wiederum als Kalibrierungsvorrichtung verwendet werden. Dies bedeutet, dass dann, wenn in einer Anlage Geräte mit NFC-Technologie verwendet werden, jedes dieser Geräte als Kalibrierungsvorrichtung eingesetzt werden kann. Dabei ist vorgesehen, dass ein von dem Gerät vorgegebener NFC-Stream den ursprünglichen NFC-Stream des Gerätes und eine Erweiterung umfasst, welche den Koordinaten des Gerätes entsprechen.

Die erfindungsgemäße Kalibrierungsvorrichtung zeichnet sich gegenüber dem Stand der Technik durch eine besonders hohe Genauigkeit aus, die im Millimeter-Bereich liegt. Durch Verwendung einer Kalibrierungsvorrichtung 10 besteht die Möglichkeit, dem mobilen Gerät 12 zu jeder Zeit die exakte Position mitzuteilen

Die Position des mobilen Gerätes in der realen Welt ist während der Synchronisierungszeit jederzeit dieselbe. Verwendet wird die Koordinate, die von der Kalibrierungsvorrichtung in das mobile Gerät gesetzt wurde, wie z. B. die Koordinate der linken oberen Ecke des mobilen Gerätes. Die Z-Koordinate ergibt sich aus dem Abstand zwischen Sende- und Empfangsantennen. Zum Empfang eignen sich zwei oder mehr NFC-Chips. Das mobile Gerät sendet ein Signal aus und die Kalibrierungsvorrichtung kann mehrere Empfänger aufweisen, welche die Positionen des Senders über Triangulation berechnen können.

Da die Navigation im Innenraum ausschließlich auf der Basis der inertialen Navigationseinheit 24 beruht, verbraucht das Verfahren im mobilen Gerät 12 gegenüber Lösungen nach dem Stand der Technik weitaus weniger Energie, da die in solchen Lösungen verwendeten Funksysteme, wie WiFi, Bluetooth oder 4G-LTE, immer aktiv sind und daher einen hohen Energieverbrauch aufweisen, was für mobile Geräte meist nachteilig ist.

## Patentansprüche

1. Verfahren zur hochpräzisen Positionsbestimmung eines mobilen Gerätes (12, 40) mittels Nahfeldkommunikation (NFC - Near Field Communication), wobei eine NFC-Kommunikation zwischen einer ersten NFC-Antenne (14.1...14.n) einer Kalibrierungsvorrichtung (10, 66, 68) und einer zweiten NFC-Antenne (30, 46) des mobilen Gerätes (12, 40) hergestellt wird, wenn diese in Nähe zueinander sind, um Positionsdaten in das mobile Gerät (12, 40) zu übertragen, wobei das mobile Gerät (12, 40) bezogen auf die Position der ersten NFC-Antenne (14.1...14.n) in einer reproduzierbar definierten Position positioniert wird, wobei durch die NFC-Kommunikation zwischen der zumindest einen ersten NFC-Antenne (14.1...14.n) und der zweiten NFC-Antenne (30, 46) die aktuelle Position der zweiten NFC-Antenne (30, 46) ermittelt und in einem Speicher (32, 54) des mobilen Gerätes (12, 40) gespeichert wird und wobei eine inertiale Navigationseinheit (24, 48) in Bezug auf die aktuelle Position kalibriert wird,
**dadurch gekennzeichnet,**
**dass** die zumindest eine erste NFC-Antenne (14.1...14.n) NFC-Signale unterschiedlicher Signalstärke aussendet, wobei mit jedem NFC-Signal (18.1...18.k) zumindest ein Positionsdatenwert übertragen wird, der einer Reichweite des jeweiligen NFC-Signals (18.1...18.k) entspricht und dass die von der zweiten NFC-Antenne (30) empfangenen NFC-Signale (18.1... 18.k) in einer Steuereinheit (33) des mobilen Gerätes (12, 40) ausgewertet werden, wobei die Positionsdatenwerte des NFC-Signals mit der geringsten empfangenen Signalstärke als Positionsdatenwerte der zweiten NFC-Antenne (30) gespeichert werden.

2. Verfahren nach Anspruch 1,
**dadurch gekennzeichnet,**
**dass** die von der zumindest einen ersten NFC-Antenne (14.1...14.n) ausgesendeten NFC-Signale (18.1...18.k) eine Reichweite im Bereich von 0 mm ≤ RW ≤ 150 mm aufweisen, wobei die Signalstärke aufeinanderfolgender NFC-Signale (18.1...18.k) derart gesteuert wird, dass eine Reichweitenänderung (Δ RW) aufeinanderfolgender Signale im Bereich von 0,50 mm ≤ Δ RW ≤ 10 mm, vorzugsweise Δ RW = 2 mm, liegt.

3. Verfahren nach Anspruch 1 oder 2,
**dadurch gekennzeichnet ,**
**dass** die durch das NFC-Signal (18.1...18.k) gesendeten Positionsdaten die vorzugsweise geografische Position der ersten NFC-Antenne sowie zumindest einen Offset-Positionsdatenwert ΔX, ΔY, ΔZ umfassen, der der jeweiligen Reichweitenänderung der ausgesendeten NFC-Signale entspricht.

4. Verfahren nach zumindest einem der vorhergehenden Ansprüche,
**dadurch gekennzeichnet,**
**dass** die zumindest eine erste NFC-Antenne (14.1 ... 14.n) zuerst ein NFC-Signal mit einer fixen Position der ersten NFC-Antenne und anschließend nur NFC-Signale mit zumindest einem Offset-Positionsdatenwert aussendet, der der Reichweitenänderung der jeweiligen NFC-Signale in Ausbreitungsrichtung entspricht.

5. Verfahren nach zumindest einem der vorhergehenden Ansprüche,
**dadurch gekennzeichnet,**
**dass** die ersten NFC-Antennen (14.1...14.n) in Form eines NFC-Antennen-Arrays angeordnet werden, wobei das mobile Gerät (12, 40) in definierter Position durch die zweite NFC-Antenne (30, 46) ein Signal in Richtung auf die NFC-Antennen (14.1...14.n) des Antennen-Arrays sendet, die auf Empfang geschaltet sind, und wobei diejenige NFC-Antenne, die ein Signal mit der größten Signalstärke empfängt, anschließend NFC-Signale (18.1...18.k) mit unterschiedlicher Reichweite aussendet, wobei mit jedem NFC-Signal zumindest ein Positionsdatenwert übertragen wird, der der Reichweite des jeweiligen NFC-Signals entspricht und wobei die Positionsdaten des NFC-Signals mit der geringsten empfangenen Signalstärke als RX-, RY-, RZ-Positionsdaten der zweiten NFC-Antenne (30, 46) gespeichert werden.

6. Kalibrierungsvorrichtung (10, 66, 68) zur hochpräzisen Lagebestimmung eines mobilen Gerätes (12, 40) mittels Nahfeldkommunikation (NFC - Near Field Communication), wobei die Kalibrierungsvorrichtung (10, 66, 68) zumindest eine erste NFC-Antenne (14.1...14.n) und einen Speicher (17) aufweist, wobei der Speicher (17) konfiguriert ist, Positionsdaten zu speichern, die einer Position der NFC-Antenne (14.1...14.n) entsprechen, wobei das mobile Gerät (12, 40) eine zweite NFC-Antenne (30, 46) und eine damit gekoppelte Steuereinheit (33, 54) aufweist, wobei die NFC-Kommunikation zwischen der ersten NFC-Antenne (14.1...14.n) und der zweiten NFC-Antenne (30, 46) initiiert wird, wenn sich die zweite NFC-Antenne (30, 46) in der Nähe der ersten NFC-Antenne (14.1...14.n) befindet und wobei die Positionsdaten von der ersten NFC-Antenne (14.1...14.n) zu der zweiten NFC-Antenne (30) übertragen werden, wobei der Kalibrierungsvorrichtung (10, 66, 68) ein Lagefixiermittel (20) zugeordnet ist, welches ausgebildet ist, einen Gehäuseabschnitt (62, 64, 42) des mobilen Gerätes (12, 40) während der NFC-Kommunikation in einer bezogen auf die Position der zumindest einen ersten NFC-Antenne (14.1...14.n) reproduzierbar definierten Position zu positionieren, wobei die zumindest eine erste NFC-Antenne (14.1...14.n) mit einer Steuereinheit (16) gekoppelt ist, die ausgebildet ist, um die NFC-Kommunikation zwischen der zumindest einen ersten NFC-Antenne (14.1...14.n) und der NFC-Antenne (30, 46) zur Ermittlung von aktuellen Positionsdaten der zweiten NFC-Antenne (30) zu steuern und wobei eine Steuereinheit (22, 54) des mobilen Gerätes (12, 40) ausgebildet ist, um eine inertiale Navigationseinheit (24) in Bezug auf die ermittelten aktuellen Positionsdaten zu kalibrieren,
**dadurch gekennzeichnet,**
**dass** die mit der ersten NFC-Antenne (14.1... 14.n) gekoppelte Steuereinheit (16) derart ausgebildet ist, NFC-Signale unterschiedlicher Signalstärke zu senden, wobei mit jedem NFC-Signal (18.1...18.k) zumindest ein Positionsdatenwert übertragen wird, der der Reichweite des NFC-Signals entspricht und dass die Steuereinheit (22, 54) des mobilen Gerätes (12, 40) ausgebildet ist, die empfangenen NFC-Signale (18.1... 18.k) derart auszuwerten, dass die Positionsdaten des NFC-Signals (18.1...18.k) mit der geringsten empfangenen Signalstärke als Positionsdaten der zweiten NFC-Antenne (30, 46) gespeichert werden.

7. Vorrichtung nach Ansprüche 6,
**dadurch gekennzeichnet,**
**dass** das Fixiermittel (20) ein Referenz-Koordinatensystem (RX, RY, RZ) aufspannt, wobei in einer RX-RY-Ebene eine einzige NFC-Antenne (14) angeordnet ist und/oder wobei in der RX-RY-Ebene ein Array aus NFC-Antennen (14.1...14.n) angeordnet ist und/oder dass in der RX-RY-Ebene, einer RX-RZ-Ebene oder einer RY-RZ-Ebene jeweils eine oder mehrere NFC-Antennen angeordnet sind, die die NFC-Signale (18.1...18.k) aus verschiedenen Richtungen zu der zweiten NFC-Antenne (30) senden.

8. Vorrichtung nach zumindest einem der Ansprüche 6 oder 7,
**dadurch gekennzeichnet,**
**dass** das Fixiermittel (20) mechanische Anschläge (58,60) in RX-RY- und/oder RZ-Richtung oder eine Aufnahme für zumindest einen Gehäuseabschnitt (62, 64, 65,42) des mobilen Gerätes (12, 40) aufweist und/oder dass das Fixiermittel (20) ein auf einer RX-RY-Ebene angeordneter Winkel ist und/oder dass das Fixiermittel (20) eine rutschfeste Matte mit Markierung ist.

9. Vorrichtung nach zumindest einem der Ansprüche 6 bis 8,
**dadurch gekennzeichnet,**
**dass** das mobile Gerät (12, 40) ein Smartphone, Tablet oder Stift ist.

10. Vorrichtung nach Anspruch 9, wobei das mobile Gerät ein Stift ist,
**dadurch gekennzeichnet,**
**dass** die zweite NFC-Antenne (46) in einer Spitze (42) des Stiftes (40) integriert und mit einer ebenfalls in dem Stift (40) integrierten Steuereinheit (54) gekoppelt ist, wobei die Steuereinheit (54) ausgebildet ist, um die von der zweiten NFC-Antenne empfangenen Positionsdaten als eigene Positionsdaten abzuspeichern und um eine inertiale Navigationseinheit (48) in Bezug auf die empfangenen Positionsdaten zu kalibrieren.

## Claims

1. A method for high-precision position determination of a mobile device (12, 40) by means of near field communication (NFC - Near Field Communication), wherein a NFC communication is established between a first NFC antenna (14.1... 14.n) of a calibration device (10, 66, 68) and a second NFC antenna (30, 46) of the mobile device (12, 40) when said devices are in proximity to one another, for the purpose of transmitting position data to the mobile device (12, 40), wherein the mobile device (12, 40) is positioned in a reproducibly defined position in relation to the position of the first NFC antenna (14.1...14.n), wherein via the NFC communication between the at least one first NFC antenna (14.1...14.n) and the second NFC antenna (30, 46), the current position of the second NFC antenna (30, 46) is determined and is stored in a memory (32, 54) of the mobile device (12, 40), and wherein an inertial navigation unit (24, 48) is calibrated with respect to the current position,
**characterized in**
**that** the at least one first NFC antenna (14.1...14.n) emits NFC signals of various signal strengths, wherein with each NFC signal (18.1...18.k) at least one position data value that corresponds to the range of the NFC signal (18.1...18.k) in question is transmitted, and that the NFC signals (18.1... 18.k) received from the second NFC antenna (30) are evaluated in a control unit (33) of the mobile device (12, 40), wherein the position data values of the NFC signal having the lowest received signal strength are stored as position data values for the second NFC antenna (30).

2. The method according to claim 1,
**characterized in**
**that** the NFC signals (18.1...18.k) emitted by the at least one first NFC antenna (14.1...14.n) have a range of 0 mm ≤ RW ≤ 150 mm, wherein the signal strength of successive NFC signals (18.1...18.k) is controlled such that a change in the range (ΔRW) of successive signals is within the range of 0.50 mm ≤ ΔRW ≤ 10 mm, preferably Δ RW = 2 mm.

3. The method according to claim 1 or 2,
**characterized in**
**that** the position data transmitted via the NFC signal (18.1...18.k) comprise the preferably geographic position of the first NFC antenna and at least one offset-position data value ΔX, ΔY, ΔZ that corresponds to the respective change in range of the emitted NFC signals.

4. The method according to at least one of the preceding claims,
**characterized in**
**that** the at least one first NFC antenna (14.1...14.n) first emits an NFC signal with a fixed position of the first NFC antenna, and then emits only NFC signals with at least one offset-position data value that corresponds to the change in range of the respective NFC signals in the propagation direction.

5. The method according to at least one of the preceding claims,
**characterized in**
**that** the first NFC antennas (14.1...14.n) are arranged in the form of an NFC antenna array, wherein the mobile device (12, 40), in a defined position, emits a signal by means of the second NFC antenna (30, 46) in the direction of the NFC antennas (14.1...14.n) of the antenna array, which are switched to receiver mode, and wherein the NFC antenna that receives a signal having the highest signal strength then emits NFC signals (18.1...18.k) of different ranges, wherein with each NFC signal, at least one position data value that corresponds to the range of the NFC signal in question is transmitted, and wherein the position data of the NFC signal having the lowest received signal strength are stored as RX, RY, RZ position data for the second NFC antenna (30, 46).

6. A calibration device (10, 66, 68) for high-precision position determination of a mobile device (12, 40) by means of near field communication (NFC - Near Field Communication), wherein the calibration device (10, 66, 68) includes at least one first NFC antenna (14.1...14.n) and a memory (17), wherein the memory (17) is configured to store position data that correspond to a position of the NFC antenna (14.1...14.n), wherein the mobile device (12, 40) includes a second NFC antenna (30, 46) and a control unit (33, 54) coupled thereto, wherein the NFC communication between the first NFC antenna (14.1...14.n) and the second NFC antenna (30, 46) is initiated when the second NFC antenna (30, 46) is in proximity to the first NFC antenna (14.1...14.n), and wherein the position data are transmitted from the first NFC antenna (14.1...14.n) to the second NFC antenna (30), wherein the calibration device (10, 66, 68) is assigned a position-fixing means (20), which is designed to position a housing section (62, 64,42) of the mobile device (12, 40) in a reproducibly defined position relative to the position of the at least one first NFC antenna (14.1...14.n) during the NFC communication, and wherein the at least one first NFC antenna (14.1...14.n) is coupled to a control unit (16), which is designed to control the NFC communication between the at least one first NFC antenna (14.1...14.n) and the NFC antenna (30, 46) for the purpose of acquiring current position data for the second NFC antenna (30), and wherein a control unit (22, 54) of the mobile device (12, 40) is designed to calibrate an inertial navigation unit (24) with respect to the acquired current position data,
**characterized in**
**that** the control unit (16) coupled to the first NFC antenna (14.1 ...14.n) is designed to transmit NFC signals of varying signal strengths, wherein with each NFC signal (18.1 ...18.k), at least one position data value that corresponds to the range of the NFC signal in question is transmitted, and in that the control unit (22, 54) of the mobile device (12, 40) is designed to evaluate the received NFC signals (18.1...18.k) such that the position data of the NFC signal (18.1...18.k) having the lowest received signal strength are stored as position data for the second NFC antenna (30, 46).

7. The device according to claim 6,
**characterized in**
**that** the fixing means (20) spans a reference coordinate system (RX, RY, RZ), wherein a single NFC antenna (14) is located in an RX-RY plane and/or wherein an array of NFC antennas (14.1...14.n) is arranged in the RX-RY plane, and/or in that one or more NFC antennas are arranged in the RX-RY plane, in an RX-RZ plane or in an RY-RZ plane and transmit NFC signals (18.1 ...18.k) from different directions to the second NFC antenna (30).

8. The device according to at least one of the claims 6 or 7,
**characterized in that** the fixing means (20) includes mechanical stops (58, 60) in the RX, the RY and/or the RZ direction, or a receptacle for at least one housing section (62, 64, 65, 42) of the mobile device (12, 40), and/or **in that** the fixing means (20) is an angle disposed on an RX-RY plane, and/or **in that** the fixing means (20) is a non-slip mat with marking.

9. The device according to at least one of the claims 6 to 8,
**characterized in**
**that** the mobile device (12, 40) is a smartphone, tablet or pen.

10. The device according to claim 9, wherein the module device is a pen,
**characterized in that** the second NFC antenna (46) is integrated into the tip (42) of the pen (40) and is coupled to a control unit (54) likewise integrated into the pen (40), wherein the control unit (54) is designed to store the position data received from the second NFC antenna as position data for said antenna and to calibrate an inertial navigation unit (48) with respect to the received position data.

## Revendications

1. Procédé de détermination de la position d'un appareil mobile (12, 40) avec une précision élevée au moyen de la communication en champ proche (CCP ou NFC - Near Field Communication), sachant qu'une communication CCP est établie entre une première antenne CCP (14.1... 14.n) d'un dispositif de calibrage (10, 66, 68) et une seconde antenne CCP (30, 46) de l'appareil mobile (12, 40) quand celles-ci sont proches l'une de l'autre, afin de transmettre des données de position à l'appareil mobile (12, 40), sachant que l'appareil mobile (12, 40) est positionné, par rapport à la position de la première antenne CCP (14.1... 14.n) dans une position définie de manière reproductible, sachant qu'au moyen de la communication CCP entre ladite au moins une première antenne CCP (14.1...14.n) et la seconde antenne CCP (30, 46), la position actuelle de la seconde antenne CCP (30, 46) est déterminée et enregistrée dans une mémoire (32, 54) de l'appareil mobile (12, 40) et sachant qu'une unité de navigation inertielle (24, 48) est calibrée concernant la position actuelle,
**caractérisé en ce**
**que** ladite au moins une première antenne CCP (14.1...14.n) émet des signaux CCP de différente intensité de signal, sachant qu'est transmise avec chaque signal CCP (18.1... 18.k) au moins une valeur de données de position, qui correspond à une portée du signal CCP respectif (18.1...18.k) et que les signaux CCP (18.1...18.k) reçus par la seconde antenne CCP (30) sont évalués dans une unité de commande (33) de l'appareil mobile (12, 40), sachant que les valeurs de données de position du signal CCP avec la plus faible intensité de signal reçue sont enregistrées comme valeurs de données de position de la seconde antenne CCP (30).

2. Procédé selon la revendication 1,
**caractérisé en ce**
**que** les signaux CCP (18.1...18.k) émis par ladite au moins une première antenne CCP (14.1...14.n) présentent une portée dans la plage telle que 0 mm ≤ RW ≤ 150 mm, sachant que l'intensité des signaux CCP successifs (18.1...18.k) est commandée de telle sorte qu'une modification de la portée (Δ RW) des signaux successifs se situe dans la plage telle que 0,50 mm ≤ ΔRW ≤ 10 mm, de préférence Δ RW = 2 mm.

3. Procédé selon la revendication 1 ou 2,
**caractérisé en ce**
**que** les données de position émises par le signal CCP (18.1... 18.k) comprennent la position de préférence géographique de la première antenne CCP ainsi qu'au moins une variation de la valeur de données de position ΔX, ΔY, ΔZ qui correspond à la modification respective de la portée des signaux CCP émis.

4. Procédé selon au moins l'une des revendications précédentes,
**caractérisé en ce**
**que** ladite au moins une première antenne CCP (14.1 ... 14.n) émet tout d'abord un signal CCP avec une position fixe de la première antenne CCP et ensuite, uniquement des signaux CCP avec au moins une variation de valeur de données de position qui correspond à la modification de la portée des signaux CCP respectifs dans le sens de propagation.

5. Procédé selon au moins l'une des revendications précédentes,
**caractérisé en ce**
**que** les premières antennes CCP (14.1...14.n) sont disposées sous la forme d'un réseau d'antennes CCP, sachant que l'appareil mobile (12, 40) en position définie envoie par le biais de la seconde antenne CCP (30, 46) un signal en direction des antennes CCP (14.1...14.n) du réseau d'antennes, qui sont réglées sur la réception, et sachant que l'antenne CCP respective qui reçoit un signal avec la plus grande intensité, émet ensuite des signaux CCP (18.1...18.k) de différente portée, sachant qu'est transmise avec chaque signal CCP au moins une valeur de données de position qui correspond à la portée du signal CCP respectif et sachant que les données de position du signal CCP avec la plus faible intensité reçue sont enregistrées sous forme de données de position RX, RY, RZ de la seconde antenne CCP (30, 46).

6. Dispositif de calibrage (10, 66, 68) pour la détermination de la position d'un appareil mobile (12, 40) avec une précision élevée au moyen de la communication en champ proche (CCP ou NFC - Near Field Communication), sachant que le dispositif de calibrage (10, 66, 68) présente au moins une première antenne CCP (14.1... 14.n) et une mémoire (17), sachant que la mémoire (17) est configurée pour enregistrer des données de position qui correspondent à une position de l'antenne CCP (14.1...14.n), sachant que l'appareil mobile (12, 40) présente une seconde antenne CCP (30, 46) et une unité de commande (33, 54) couplée avec, sachant que la communication CCP est initiée entre la première antenne CCP (14.1... 14.n) et la seconde antenne CCP (30, 46) quand la seconde antenne CCP (30, 46) se trouve à proximité de la première antenne CCP (14.1... 14.n) et sachant que les données de position sont transmises de la première antenne CCP (14.1... 14.n) à la seconde antenne CCP (30), sachant qu'est attribué au dispositif de calibrage (10, 66, 68) un fixateur d'emplacement (20) qui est conçu pour positionner une section du boîtier (62, 64, 42) de l'appareil mobile (12, 40) pendant la communication CCP dans une position définie de manière reproductible par rapport à la position de ladite au moins une première antenne CCP (14.1 ...14.n) et que ladite au moins une première antenne (14.1...14.n) est couplée à une unité de commande (16) qui est conçue pour commander la communication CCP entre ladite au moins une première antenne CCP (14.1...14.n) et l'antenne CCP (30, 46) destinée à la détermination des données de position actuelles de la seconde antenne CCP (30) et sachant qu'une unité de commande (22, 54) de l'appareil mobile (12, 40) est conçue pour calibrer une unité de navigation inertielle (24) concernant les données de position actuelles déterminées.
**caractérisé en ce**
**que** l'unité de commande (16) couplée à la première antenne CCP (14.1... 14.n) est conçue de sorte à envoyer des signaux CCP de différente intensité, sachant qu'est transmise avec chaque signal CCP (18.1 ...18.k) au moins une valeur de données de position qui correspond à la portée du signal CCP et que l'unité de commande (22, 54) de l'appareil mobile (12, 40) est conçue pour analyser les signaux CCP reçus (18.1...18.k) de sorte que les données de position du signal CCP (18.1...18.k) avec la plus faible intensité reçue sont enregistrées comme données de position de la seconde antenne CCP (30, 46).

7. Dispositif selon la revendication 6,
**caractérisé en ce**
**que** le fixateur (20) sous-tend un système de coordonnées de référence (RX, RY, RZ), sachant que dans un plan RX-RY est disposée une seule antenne CCP (14) et/ou sachant que dans le plan RX-RY est disposé un réseau d'antennes CCP (14.1...14.n) et/ou que dans le plan RX-RY, dans un plan RX-RZ ou dans un plan RY-RZ sont disposées respectivement une ou plusieurs antennes CCP qui envoient les signaux CCP (18.1...18.k) depuis différentes directions vers la seconde antenne CCP (30).

8. Dispositif selon au moins l'une des revendications 6 ou 7,
**caractérisé en ce**
**que** le fixateur (20) présente des butées mécaniques (58, 60) dans le sens RX-RY et/ou dans le sens RZ ou un logement pour au moins une section de boîtier (62, 64, 65, 42) de l'appareil mobile (12, 40) et/ou que le fixateur (20) est un angle disposé sur un plan RX-RY et/ou que le fixateur (20) est un tapis antidérapant avec marquage.

9. Dispositif selon au moins l'une des revendications 6 à 8,
**caractérisé en ce**
**que** l'appareil mobile (12, 40) est un smartphone, une tablette ou un crayon.

10. Dispositif selon la revendication 9, sachant que l'appareil mobile est un crayon, **caractérisé en ce**
**que** la seconde antenne CCP (46) est intégrée dans une pointe (42) du crayon (40) et est couplée avec une unité de commande (54) intégrée également dans le crayon (40), sachant que l'unité de commande (54) est conçue pour enregistrer les données de position reçues par la seconde antenne CCP comme ses propres données de position et pour calibrer une unité de navigation inertielle (48) concernant les données de position reçues.
